# EUROPEAN PATENT APPLICATION

(11) **EP 1 585 295 A1**
(43) Date of publication of application: **12.10.2005**
(21) Application number: 04101395.4
(22) Date of filing: 05.04.2004
(51) Int. Cl.: H04M 1/725, H04M 1/23

(54) **Interface for electronic device**

(71) Applicant: Sony Ericsson Mobile Communications AB, 221 88 Lund (SE)
(72) Inventor: Wilson, Andreas, 212 22 Malmö (SE)
(74) Representative: Lindberg, Olle Nils Olof

(57) **Abstract**

Electronic device (1), such as a mobile phone, comprising a data output interface including a display (3), and a data input interface including a keypad (4) with two or more physically separate keys (41). A first portion of a touch-sensitive membrane (8) is disposed over said display, and a second portion of said touch-sensitive membrane is disposed beside said display underneath said keys, devised to detect input of data upon depression of said keys towards said membrane.

## Description

### Field of the invention

The present invention relates to communication interfaces for electronic devices, more specifically to data input interfaces for data communication or processor devices, such as mobile phones and computers. In particular the invention relates keypads for such devices.

### Background

The use of electronic devices with data input capabilities, such as computers and mobile phones, has had enormous development in the world in the last decades. Traditionally, keyboards or keypads have been used for entering data into computers and telephone devices, including mobile phones. Auxiliary input means include joysticks or jog balls, and voice-controlled systems. Data output from the electronic devices is mainly provided by means of displays, on which images, text, and numbers are visualised.

A lot of effort has been made in making smaller electronic devices, in particular for portable use, such as mobile phones, laptop computers, and Personal Digital Assistants (PDA). Much help has been obtained from the miniaturisation of electronic components and the development of more efficient batteries. In mobile communications, the communication systems have gone from analogue to digital, and at the same time the dimensions of the communication terminals have gone from briefcase size to the pocket size phones of today, in only a couple of decades. Numerous manufacturers now offer pocket-sized terminals with a wide variety of capabilities and services, such as packet-oriented transmission and multiple radio band coverage. Still today, mobile phones are getting smaller and smaller and the size is generally considered to be an important factor for the end customer. Built-in antennas of different types have eliminated the need for protruding antenna elements. At the same time, terminals are becoming increasingly capable of performing more advanced functions and services, both due to the development of the terminals and the network systems. The development of new transmission schemes, the so-called 3^{rd} generation mobile system currently being implemented and the 4^{th} generation to be expected within ten years, also provides the possibility to convey more advanced data to the wireless communication terminals, such as real time video.

Both regarding portable computers and mobile phones, the end users have a number of conflicting requirements. Basically, the device should be as small and light-weight as possible. Furthermore, it should provide more and more advanced functions, have a long battery time, and have a user-friendly interface. Still, there is only so much space in a mobile phone or a computer, and in order to be competitive the elements of the devised must be carefully packaged.

A trend within the fields of mobile telephony and pocket computers such as Personal Digital Assistants PDA:s, is to implement larger displays serving as data output interfaces. This is particularly interesting with the transmission schemes which make it possible to transmit and present video. Furthermore, such displays may also be touch-sensitive and serve as data input interfaces, preferably operated by means of a pen-like stylus. Still, it is recognised that many users prefer the traditional keypad, at least as a complement to the touch-sensitive display, with distinct separate keys which in many cases are considered to be easier to operate with the fingers.

A common type of keypad of today, used for mobile phones, comprises metal domes ordered on a self-adhesive tape, which domes are devised to make electrical contact with a central connector member arranged under the dome upon depression of the dome. However, this type of keypad is highly sensitive to e.g. moisture and dust, which leads to a less than satisfactory return rate.

Another type of keypad suggested in the prior art is disclosed in EP 707 257. This document teaches a device, such as a wireless telephone or a PDA, which has a touch-sensitive membrane. The membrane covers both a display and a mechanical set of labels which indicate the functions of separate keys of a keypad. The data input functionality of the keypad is effected by means of the membrane.

### Summary of the invention

The use of touch-sensitive displays has definitely increased the functionality of data input, and particularly the correlation between data input and data output. The result is a very user-friendly interface. Still, displays are relatively expensive components, compared to keypads. Furthermore, the use of touch-sensitive displays suffer from the drawback that there are no distinct physical keys. It is therefore easier to miss an intended surface area of the display when pressing the display with a finger. Furthermore, there is no real tactile feedback from a touch-sensitive display in its basic embodiment. This problem has been targeted with many different solutions, using e.g. audible click-sounds when depression of a certain area of a display is detected. A problem with such a solution is that many users prefer silent devices, and it is generally perceived as annoying to here clicks or beeps from e.g. a mobile phone when a user enters a dial number or a text message.

Sony Ericsson has released mobile phones, such as the P800, which include a flip which partly covers the display, and which includes keys of a traditional keypad. Data input is achieved by pressing the keys, which in turn press the membrane covering the display. When the flip is unfolded, the full size of the display is visible, and data input may be achieved with a stylus. This way, the benefits of a traditional keypad is obtained, in combination with a large display.

It is an object of the present invention to provide data input means for electronic devices, such as mobile phones, PDA's, or laptop computers, which overcome the aforementioned drawbacks of conventional keypads, and which at the same time are free from the mentioned problems related to touch-sensitive displays, and bring about economic benefits related to production cost.

According to a first aspect, this object is fulfilled by an electronic device, comprising a data output interface including a display, and a data input interface including a keypad with two or more physically separate keys, wherein a first portion of a touch-sensitive membrane is disposed over said display, and a second portion of said touch-sensitive membrane is disposed beside said display underneath said keys, devised to detect input of data upon depression of said keys towards said membrane.

In one embodiment, the electronic device includes a keypad unit comprising said keypad in which said keys are ordered in a certain physical layout, which keypad unit is disconnectable from said electronic device and exchangeable for another keypad unit with keys in a different physical layout.

Preferably, the electronic device comprises a position sensor connected to said membrane, devised to detect position data for where said membrane is pressed, a function data memory in which position data for said membrane are linked to predetermined functions, and a microprocessor system devised to effect a predetermined function upon detected depression of the membrane, wherein said keypad unit comprises a local memory connectable to said function data memory, said local memory storing data which links position data related to the physical layout of said keys to predetermined functions, and wherein said device and said keypad unit are devised with cooperating connectors for establishing communicative connection between the local memory and the function data memory upon connection of the keypad unit to the device.

In another embodiment, a cover unit for the electronic device comprises said keypad in which said keys are ordered in a certain physical layout, which cover unit is disconnectable from said electronic device and exchangeable for another cover unit with keys in a different physical layout.

Preferably, the electronic device comprises a position sensor connected to said membrane, devised to detect position data for where said membrane is pressed, a function data memory in which position data for said membrane are linked to predetermined functions, and a microprocessor system devised to effect a predetermined function upon detected depression of the membrane, wherein said cover unit comprises a local memory connectable to said function data memory, said local memory storing data which links position data related to the physical layout of said keys to predetermined functions, and wherein said device and said cover unit are devised with cooperating connectors for establishing communicative connection between the local memory and the function data memory upon connection of the cover unit to the device.

In a more specific embodiment, said cover unit comprises an opening for said display.

In a preferred embodiment, said local memory stores display control data, devised to control said microprocessor system to show a symbol on said display, representative of an indicator disposed on one of said keys, upon depression of that key.

In another embodiment, said local memory stores language setting data, devised to control said microprocessor system to present data output symbols on said display using a language specified by said language setting data.

In yet another embodiment, said local memory stores display control data, devised to control display orientation of items shown on said display, dependent on orientation of said indicator.

In one embodiment, said membrane comprises a first layer in which a plurality of electric leads extend in a first direction, and a second layer in which a plurality of electric leads extend in a second direction at an angle to said first direction, wherein said position detector is devised to detect position data by sensing differences in electric characteristics between said layers when they are pressed together.

In a preferred embodiment, said device is a mobile phone.

According to a second aspect, the object of the present invention is fulfilled by a method for changing a data interface of an electronic device, having a data output interface including a display covered by a first portion of a touch-sensitive membrane, and a data input interface including second portion of said touch-sensitive membrane disposed beside said display, comprising the steps of:
- connecting a unit to said second portion of the membrane, which unit comprises a keypad with two or more physically separate keys usable for depression of said membrane; and
- downloading keypad-specific data to a function data memory in said electronic device, which keypad-specific data links a physical layout of the separate keys of said unit, representing where depression of said keys effects said membrane, to predetermined functions of the device.

In one embodiment, said unit carries a local memory storing said keypad-specific data, the method comprising the steps of:
- establishing communicative connection between cooperating connectors devised on said electronic device and on said unit, upon connection of the unit to the device; and
- downloading said keypad-specific data from said local memory to said function data memory.

In a preferred embodiment, said unit is a detachable cover for the electronic device, incorporating said keypad.

Preferably, said device is a mobile phone.

### Brief description of the drawings

The present invention will now be described in more detail with reference to preferred embodiments, given only by way of example and illustrated in the accompanying drawings, in which:
Fig. 1 schematically illustrates a cross-sectional side view of a first embodiment of the invention;
Fig. 2 schematically illustrates a version of the embodiment of Fig. 1, including a detachable keypad unit;
Fig. 3 schematically illustrates another version of the embodiment of Fig. 1, including a detachable cover unit including a keypad;
Fig. 4 schematically illustrates functional elements of an electronic device according to an embodiment of the invention; and
Fig. 5 schematically illustrates different keypad layouts of covers attachable to an electronic device according to an embodiment of the invention.

### Detailed description of preferred embodiments

The present description relates to the field of electronic devices usable for data communication or data processing, having a data input interface comprising a keypad and a data output interface comprising a display. The data communication or processing devices are in short denoted electronic devices in this disclosure, and includes all mobile equipment devised for radio communication with a radio station, which radio station also may be mobile terminal or e.g. a stationary base station. Consequently, the term terminal includes data communication devices such as mobile telephones, pagers, communicators, electronic organisers, smartphones, PDA:s (Personal Digital Assistants) and DECT terminals (Digital Enhanced Cordless Telephony). The invention is also applicable to computers, e.g. laptops, which are included in the electronic device used herein. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

Electronic devices with data input capabilities are provided with some form of data input interface. In order to obtain a more straightforward relation between the input and output interfaces, data input capabilities have also been incorporated in the data output display. An early solution was to provide a grid of light beams just over the outer surface of the display, such that when e.g. a finger was pointed to a certain area of the display, the light beams passing that area were blocked. Photo detectors sensing the beams of the grid were then devised to detect the absence of the blocked beam, which was interpreted as a data input signal with a certain coordinate pair in two-dimensional plane of the display, corresponding to the area pointed at.

Since then, display technology has advanced tremendously, and today touch-sensitive displays are common. Several different types of touch-sensitive display solutions have been proposed. A common type of display makes use of an electrical touch membrane instead of an optical pointing sensor. In a typical state of the art touch-sensitive membrane, a grid of fine electrical wires are provided in a sandwich structure. Wires extending parallel to each other in a first direction are arranged in a first layer, whereas wires extending parallel to each other in second direction, perpendicular or at least at an angle to the first direction, are arranged in a second layer, proximate to said first layer. When this sandwich structure is pressed such that the two planes are locally brought closer to each other, an electrical difference may be sensed. In theory, it would be possible to detect shortcuts obtained when the wires are pressed into contact with each other. In reality, a measurement of change in resistance between the wires is typically sensed. For this purpose, the fine wires of the grid are connected to some form of electrical sensor, such as a current sensor or voltage sensor, as is well known to the skilled person. The touch-sensitive membranes of today are transparent and have a very good resolution, and may typically be used with a stylus for handwriting directly on the display screen. However, the resolution of the touch-sensitive area is of course determined by the spatial frequency of the grid, which may be selected dependent on the intended use.

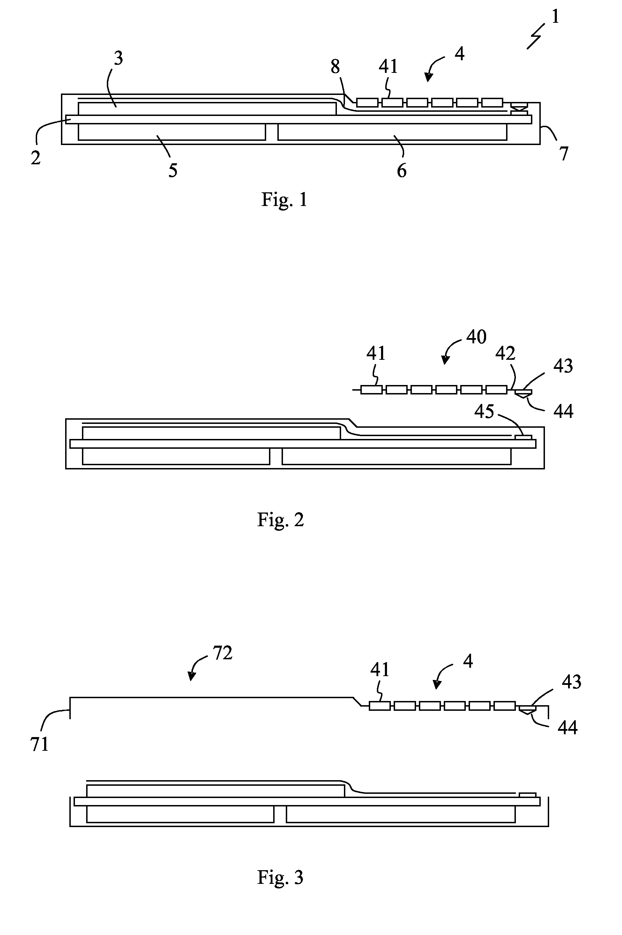

Fig. 1 illustrates a side view of an electronic device in the form of a mobile phone 1, representing an embodiment of the present invention. Device 1 comprises a core comprising a printed circuit board 2 directly or indirectly supporting the other components of the terminal. Device 1 is illustrated with its front side facing upwards, on which a display 3 is visible, as well as a keypad 4 with separate keys 41. Display 3 forms part of the data output interface, and keypad 4 forms part of the data input interface, as is well known by the skilled person. Device 1 is further equipped with an antenna 5, a battery 6, and radio transceiver circuitry (not shown) for establishing radio connection with a communications network. A cover 7, which may include several cover members, enclose the device. The general functions of mobile phones and computers are not discussed further herein, since they are not important to the present invention.

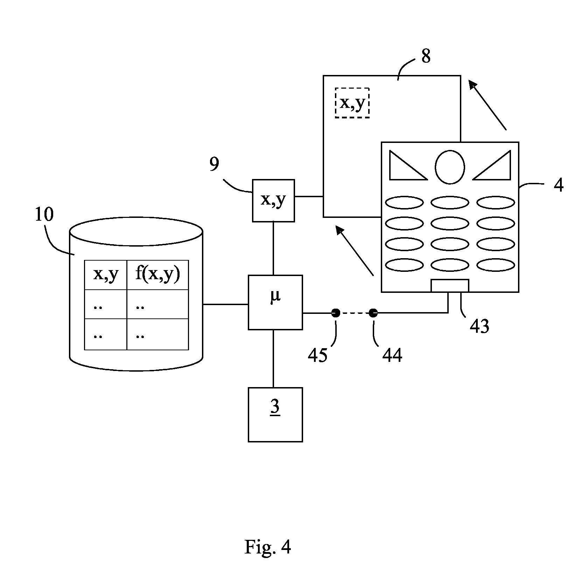

As is illustrated in Fig. 1, the device 1 further includes a touch-sensitive membrane 8, which is disposed underneath keys 41 of keypad 4. In a manner well known to the skilled person, touch-sensitive membranes are used on displays for data input purposes. A sensor senses a position where membrane 8 is being depressed, and relates position data for that position to function data in a function data memory, from which the input pressure signal is transformed into a functional command, such as "display figure 4 on display at cursor". According to the invention, membrane 8 is disposed under the keypad 4, and beside display 3. It should be noted that the drawings are purely schematic, and that membrane 8 in a real embodiment is arranged in close contact with display 3. By means of the present invention, several advantageous effects are obtained.

A traditional keypad with separate keys is obtained, which provides a better tactile feedback than a flat display surface.

At the same time, the sensitivity problems related to traditional keypads regarding e.g. moisture is overcome by the extremely durable touch-sensitive membrane 8.

Furthermore, by using the same membrane 8 both over display 3, with a first portion of the membrane, and under keypad 4 with a second portion of the membrane, fewer components have to be used.

Since the touch-sensitive membrane is flexible, it may be bent as illustrated in Fig. 1, or held flat, which brings about a high degree of freedom when designing the device, with e.g. curved keypads.

A preferred embodiment of the invention makes use of the fact that the keys 41 and the pressure-sensing component, i.e. membrane 8, are separate. This makes it possible to change keypad for the electronic device in a simple way. Fig. 4 shows a schematic illustration of certain functional components of an embodiment of an electronic device according to the invention. It should be understood that Fig. 4 illustrates communicative interconnections between functional elements of device 1, and not necessarily how physical elements would be divided and connected. A microprocessor µ represents a central control and processing system for the electronic device, which as such may include a more complex computer system. The data input interface of the device includes a touch-sensitive membrane 8, to which a position sensor 9 is connected. In a manner well known to the skilled person, applied pressure to an area x,y of membrane 8 will generate a local change in electric properties of membrane 8, and the position is detected for where the pressure was applied is by sensor 9. A function data memory 10 stores information relating positions x,y of membrane 8 to functions or commands for electronic device 1, in a database. Microprocessor µ is connected to sensor 9, and upon reception of position data from sensor 9, related functional data f(x,y) are retrieved from the database in memory 10. The retrieved functional data f(x,y) is then executed by means of microprocessor µ. The functional data may e.g. relate to presentation of a certain symbol on display 3, or represent a command to send a radio signal. A keypad 4 is positioned over membrane 8, such that pressure applied on any of keys 41 of keypad 4 will be transferred to membrane 8, generating a signal which sensor 9 is devised to pick up.

Fig. 2 illustrates an embodiment of an electronic device 1 with an exchangeable keypad unit 40. Preferably, keypad unit 40 comprises keys 41 and a support structure 42, which e.g. be a flexible film to which keys 41 are attached. It should be noted however, that support structure 42 is not an essential feature, keys 41 may also be separately attached to membrane 8. When exchanging one keypad unit 40 for another, or when initially connecting a keypad to electronic device 1, it is important that database 10 holds the correct data. More specifically, the position data in database 10 must relate to where keys 41 are located, and the related functional data in database 10 should correspond to visual indicators of keys 41, such as printed or structured signs. Exchange of one keypad unit 40 for another keypad with different key layout or different indicators on the keys, is therefore preferably associated with an exchange or addition of the data in database 10. The updating of the data of database 10 may be performed by separate software download, e.g. from a network by means of radio transmission, or from a wire-connected computer. However, in a preferred version of this embodiment, keypad unit 40 holds a local data memory 43, which includes a database linking position data related to the positions of the keys 41 of that keypad, to functional data or commands said keys 41 are set to trig. A connector 44 connected to memory 43 is devised to make contact with a cooperating connector 45 on electronic device 1, upon attachment of keypad 4 to device 1. This is also illustrated in Fig. 4. Preferably, microprocessor µ downloads the data from local memory 43 to the database of function data memory 10 upon attachment of keypad 4. In an alternative embodiment, the processing system controlled by microprocessor µ keeps the data in local memory 43, and addresses the data therein for retrieving functional data. The database of local memory 43 may represent a basic setting, and means are preferably provided for changing the data in the database of memory 10 or 43 for personalising the keypad. In a preferred embodiment, keypad unit 40 is attached to device 1 by means of a latch lock, and may preferably be released by means of a manual manoeuvre without the need for special tools.

Fig. 3 illustrates a variant of the embodiment of Fig. 2, and the same reference markings are used for corresponding features. The embodiment of Fig. 3 differs from the embodiment of Fig. 2 in that keypad 4 forms part of a releasable cover 71. Preferably, cover 71 is a partial cover, devised to cover a front face of electronic device 1, or parts of the front face. An opening 72 is formed in cover 71, for engagement about display 3, such that display 3 may be seen and the first portion of membrane 8, covering display 3, may be used. Cover 71 may by itself constitute a support structure for keys 41, alternatively a separate support structure may be employed, as illustrated in Fig. 2, attached to cover 71.

As for the embodiment of Fig. 2, a preferred version of the embodiment of Fig. 3 comprises a local memory 43, devised with a connector 44 for connection to a cooperating connector 45 on the electronic device 1. This brings about the same technical effects as mentioned above in relation to Fig. 2, by adding software information in memory 43 together with cover 71.

This embodiment makes it possible to provide a releasable cover 71 as a separate consumer product, which can be designed with much larger freedom than the exchangeable covers of today. Keys can be moved, and the size of the keys can be changed down to the resolution level of the membrane 8, with some tolerance for the attachment of cover 71. Furthermore, the number of keys may be changed. and the number makes it possible to provide a large difference in the appearance of the keypad interface of the electronic device.

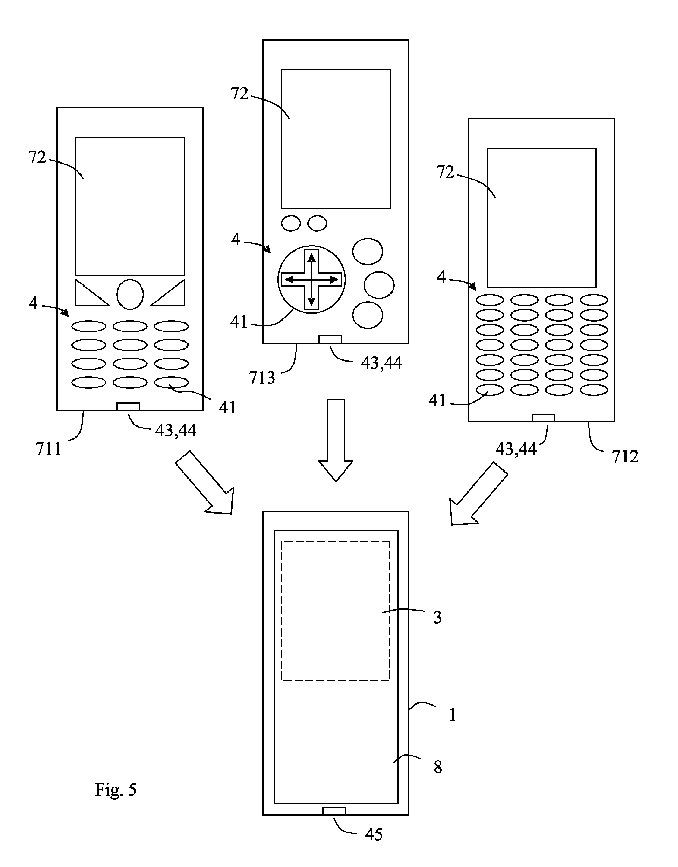

Fig. 5 illustrates different specific embodiments of the electronic device as shown in Fig. 3. By way of example, an electronic device 1 is shown without front cover. A touch-sensitive membrane 8 is disposed over a large part of the device, with a first portion covering a display 3, illustrated by means of the dashed line. A second, lower, portion of membrane 8 is devised for use by a keypad, arranged beside display 3 and over the second portion of membrane 8.

On the upper left side of Fig. 5, a first type of attachable cover 711 is shown, carrying a memory 43 with connector 44. Mechanical attachment means (not shown) are devised for releasably attaching cover 711 to device 1, such that contact is established between connector 44 and a cooperating connector 45 on device 1. The data of memory 43 adapts the electronic device to use with the key layout of cover 711, in accordance with the preceding description, which layout is more or less a standard mobile phone layout.

On the upper right side of Fig. 5, a second type of attachable cover 712 is shown, also carrying a memory 43 with connector 44 and mechanical attachment means. The data of memory 43 adapts the electronic device to use with the key layout of cover 712, in accordance with the preceding description. As is evident from the drawing, there are more keys 41 in the keypad of cover 712 than in the keypad of cover 711. Furthermore, the layout of the keys 41 in cover 712 differs from cover 711. A cover such as 712 may be selected for adapting the electronic device 1 to other purposes than pure telephony. E.g. a cover 712 may have more keys with letters shown as indicators on keys 41, and thereby be better served for text input. A design with many keys may also be suitable for specific languages, such as certain Asian languages which make use of symbols instead of letters, e.g. Mandarin or Japanese. In such a case, memory 43 preferably also comprises control data devised to set a corresponding language mode to the terminal. A language-specific cover 712 may be used for adapting a certain type of electronic device for marketing in plural different countries without major reconstruction, since merely the software linking positions of membrane 8 related functional data has to be selected.

In the central upper part of Fig. 5, a third embodiment of a cover 713 is shown, which is adapted for controlling a computer game on electronic device 1. Cover 713 preferably also carries a memory 43 with connector 44 and mechanical attachment means. Furthermore, memory 43 may contain software for a specific game, which thereby may be purchased together with the game control interface as defined by the layout of keys 41 of cover 713.

The foregoing has described the principles, preferred embodiments and modes of operation of the present invention. However, the invention should not be construed as being limited to the particular embodiments discussed above, which should be regarded as illustrative rather than restrictive, and it should be appreciated that variations may be made in those embodiments by workers skilled in the art without departing from the scope of the present invention, as defined by the following claims.

## Claims

1. Electronic device (1), comprising a data output interface including a display (3), and a data input interface including a keypad (4) with two or more physically separate keys (41), **characterised in that** a first portion of a touch-sensitive membrane (8) is disposed over said display, and a second portion of said touch-sensitive membrane is disposed beside said display underneath said keys, devised to detect input of data upon depression of said keys towards said membrane.

2. The electronic device as recited in claim 1, **characterised in that** a keypad unit (40) comprises said keypad in which said keys are ordered in a certain physical layout, which keypad unit is disconnectable from said electronic device and exchangeable for another keypad unit with keys in a different physical layout.

3. The electronic device as recited in claim 2, **characterised by** a position sensor (9) connected to said membrane, devised to detect position data for where said membrane is pressed, a function data memory (10) in which position data for said membrane are linked to predetermined functions, and a microprocessor system (µ) devised to effect a predetermined function upon detected depression of the membrane, wherein said keypad unit comprises a local memory (43) connectable to said function data memory, said local memory storing data which links position data related to the physical layout of said keys to predetermined functions, and wherein said device and said keypad unit are devised with cooperating connectors (44,45) for establishing communicative connection between the local memory and the function data memory upon connection of the keypad unit to the device.

4. The electronic device as recited in claim 1, **characterised in that** a cover unit (71) for the electronic device comprises said keypad in which said keys are ordered in a certain physical layout, which cover unit is disconnectable from said electronic device and exchangeable for another cover unit with keys in a different physical layout.

5. The electronic device as recited in claim 4, **characterised by** a position sensor (9) connected to said membrane, devised to detect position data for where said membrane is pressed, a function data memory (10) in which position data for said membrane are linked to predetermined functions, and a microprocessor system (µ) devised to effect a predetermined function upon detected depression of the membrane, wherein said cover unit comprises a local memory (43) connectable to said function data memory, said local memory storing data which links position data related to the physical layout of said keys to predetermined functions, and wherein said device and said cover unit are devised with cooperating connectors (44,45) for establishing communicative connection between the local memory and the function data memory upon connection of the cover unit to the device.

6. The electronic device as recited in claim 4 or 5, **characterised in that** said cover unit comprises an opening (72) for said display.

7. The electronic device as recited in claim 3 or 5, **characterised in that** said local memory stores display control data, devised to control said microprocessor system to show a symbol on said display, representative of an indicator disposed on one of said keys, upon depression of that key.

8. The electronic device as recited in claim 7, **characterised in that** said local memory stores language setting data, devised to control said microprocessor system to present data output symbols on said display using a language specified by said language setting data.

9. The electronic device as recited in claim 7, **characterised in that** said local memory stores display control data, devised to control display orientation of items shown on said display, dependent on orientation of said indicator.

10. The electronic device as recited in claim 3 or 5, **characterised in that** said membrane comprises a first layer in which a plurality of electric leads extend in a first direction, and a second layer in which a plurality of electric leads extend in a second direction at an angle to said first direction, wherein said position detector is devised to detect position data by sensing differences in electric characteristics between said layers when they are pressed together.

11. The electronic device as recited in any of the preceding claims, **characterised in that** said device is a mobile phone.

12. Method for changing a data interface of an electronic device (1), having a data output interface including a display (3) covered by a first portion of a touch-sensitive membrane (8), and a data input interface including second portion of said touch-sensitive membrane disposed beside said display, comprising the steps of:
- connecting a unit (40,71) to said second portion of the membrane, which unit comprises a keypad (4) with two or more physically separate keys (41) usable for depression of said membrane; and
- downloading keypad-specific data to a function data memory (10) in said electronic device, which keypad-specific data links a physical layout of the separate keys of said unit, representing where depression of said keys effects said membrane, to predetermined functions of the device.

13. The method as recited in claim 12, wherein said unit carries a local memory (43) storing said keypad-specific data, the method comprising the steps of:
- establishing communicative connection between cooperating connectors (44,45) devised on said electronic device and on said unit, upon connection of the unit to the device; and
- downloading said keypad-specific data from said local memory to said function data memory.

14. The method as recited in claim 12 or 13, wherein said unit is a detachable cover (71) for the electronic device, incorporating said keypad.

15. The method as recited in any of the preceding claims 12-14, wherein said device is a mobile phone.
